# EUROPÄISCHE PATENTANMELDUNG

(11) **EP 4 218 415 A1**
(43) Veröffentlichungstag der Anmeldung: **02.08.2023**
(21) Anmeldenummer: 22153753.3
(22) Anmeldetag: 27.01.2022
(51) Int. Cl.: A22C 7/00, A22C 17/00

(54) **VERFAHREN UND FLEISCHBEARBEITUNGSVORRICHTUNG ZUR VEREINFACHTEN HERSTELLUNG VON DÖNERSPIESSEN**

(71) Anmelder: Schorn, Gerd, 50171 Kerpen (DE); Serindik, Nihat, 50859 Köln (DE)
(72) Erfinder: Schorn, Gerd, 50171 Kerpen (DE); Serindik, Nihat, 50859 Köln (DE)
(74) Vertreter: Freischem & Partner Patentanwälte mbB

(57) **Zusammenfassung**

Die Erfindung betrifft ein Verfahren zur vereinfachten Herstellung eines Dönerspießes, der aus mindestens einem Aufsteckspieß und darauf aufgespießten Fleischstücken gebildet ist, wobei mindestens ein Fleischstück vor dem Aufspießen durch Pressverformen mittels einer Fleischbearbeitungsvorrichtung (10) in eine Sollgröße mit einer vorgegebenen Fleisch-Pressform gebracht wird, an dem Fleischstück ein lokal begrenzter und identifizierbarer Aufsteckbereich ausgebildet wird und das mindestens eine Fleischstück anschließend so mit dem Aufsteckspieß verbunden wird, dass der Aufsteckbereich von dem Aufsteckspieß durchdrungen ist. Ferner betrifft die Erfindung eine Fleischbearbeitungsvorrichtung (10) mit mindestens einer Fleischaufnahmeform (38) und mit einem an die Fleischaufnahmeform angepassten Stempel (26) zum Pressverformen eines Fleischstücks, wobei die Fleischaufnahmeform (38) durch mindestens einen Ring (32) und eine Auflagefläche (12) gebildet ist, wobei der Ring (32) relativ zu der Auflagefläche (12) beweglich angeordnet ist und wobei der Stempel (26) und der Ring (32) eine Ring-Stempel-Vorrichtung (14) bilden.

## Beschreibung

Die Erfindung betrifft ein Verfahren und eine Fleischbearbeitungsvorrichtung zur vereinfachten Herstellung von Dönerspießen. Die Erfindung betreffende Dönerspießen sind insbesondere solche mit einem Gesamtgewicht von 2,5 kg bis 50 kg, bevorzugt 5 kg bis 50 kg und besonders bevorzugt 10 kg bis 50 kg.

Ferner wird im Speziellen auf ein erfindungsgemäßes Verfahren und eine erfindungsgemäße Fleischbearbeitungsvorrichtung verwiesen, welche für die Herstellung von Dönerspießen vorgesehen sind, deren Fleischstücke aus Putenoberkeulen oder anderen Fleischstücken eines Tieres mit Knochen stammen, welche zunächst von dem Knochen abgelöst werden müssen. In diesem Zusammenhang wird insbesondere auf Fleischstücke aus Putenoberkeulen und Hähnchenkeulen sowie auf Kalbfleischstücke und auf Jungbullen-Fleischstücke verwiesen. Die entsprechenden Fleischstücke werden dann üblicherweise zunächst vorbehandelt, insbesondere mittels eines Steakers, und gewürzt, insbesondere unter Einsatz eines sogenannten Tumblers.

Das Gewicht von Fleischstücken, auf welche sich die Erfindung vorzugsweise bezieht, liegt vorzugsweise zwischen 300g und 1.500g, insbesondere zwischen 500g und 750g.

Das mindestens eine Fleischstück oder eine Fleischportion aus mehreren Fleischstücken, die gemeinsam pressverformt werden, weisen im Ausgangszustand insbesondere eine Höhe (Fleischdicke) von maximal 6 cm auf, weiter bevorzugt eine Höhe (Fleischdicke) von maximal 5 cm.

Aus EP 0 217 612 A1 sind ein Verfahren und eine Vorrichtung zur Erzeugung eines Schawarma- oder Dönerspießes bekannt. Die beschriebene Vorrichtung umfasst ein rohrförmiges Gehäuse, eine erste Pressplatte, die in dem Gehäuse verschiebbar angeordnet ist, eine zweite Pressplatte, mit welcher das Gehäuse an einem - insbesondere an dem unteren - Ende verschlossen wird, und einen Dönerspieß, welcher von einer der Pressplatten aufgenommen ist. Mit der Vorrichtung und dem Verfahren soll Fleisch innerhalb eines Gehäuses mit einem darin angeordneten Spieß komprimiert und zu einem Schawarma- oder Dönerspieß verpresst werden. Die Vorrichtung und das Verfahren dienen somit zur Herstellung und Formung eines vollständigen Schawarma- oder Dönerspießes. Dabei wird bereits auf das Problem hingewiesen, dass selbst unter Anwendung von hydraulischem Druck ab einer bestimmten Fleischmenge Druck von einer zweiten Vorrichtung sinnvoll oder erforderlich sein kann. Auf Details zum Bestücken eines Schawarma- oder Dönerspießes mit einzelnen Fleischstücken sowie auf die Vorbehandlung einzelner Fleischstücke vor dem Aufspießen wird in dem Dokument nicht eingegangen.

Aus EP 3 607 824 A1 ist ein Verfahren zur Herstellung von scheibenförmigen Formligen aus Portionen einer zähfließenden Masse bekannt, bei dem jeweils die Masse einer Portion unter Druck zwischen zwei voneinander beabstandete Formflächen gefüllt und während des Füllvorgangs der Abstand zwischen den Formflächen in Abhängigkeit von dem Fülldruck verändert wird.

Keine der vorstehend genannten Druckschriften bezieht sich im Detail auf die Herstellung von Dönerspießen mit gewachsenen Fleischstücken, die üblicherweise zunächst gewürzt und anschließend manuell auf einen Dönerspieß aufgesteckt werden. Die Herstellung von Dönerspießen mit gewachsenen Fleischstücken erfolgt in der Praxis aktuell ausschließlich manuell. Dazu werden die - üblicherweise zuvor gewürzten - Fleischstücke manuell von oben auf einen Dönerspieß aufgesteckt und dabei so angeordnet, dass der Dönerspieß manuell auf eine gewünschte Größe zugeschnitten werden kann.

Aus DE 102 06 231 B4 sind ein Verfahren zur Herstellung eines Fleischspießes und eine Maschine dafür bekannt, gemäß welchen Fleischstücke in eine Hohlform mit einer rohrförmigen, zentralen Achse eingegeben und zu einem Fleischblock geformt werden sollen. Anschließend wird der Fleischblock als Ganzes mit einer rohrförmigen, zentralen Achse auf einer Halterung befestigt, und es werden zur Erzeugung von Fleischscheiben mit geringem Abstand zueinander parallele Schnitte in den Fleischblock hinein bis zu seiner Achse vorgenommen. Dieses Verfahren ermöglicht es zwar, abgeschnittene Fleischstücke weiterzuverwenden und auch kleine Fleischteile aufzuspießen. Die Durchführung der Schnitte ist jedoch relativ umständlich und damit nicht effizient.

Der Erfindung liegt die Aufgabe zugrunde, ein Verfahren und eine Fleischbearbeitungsvorrichtung zur vereinfachten Herstellung von Dönerspießen mit Fleischstücken zur Verfügung zu stellen, mit welchen eine effiziente Produktion von Dönerspießen ermöglicht wird.

Die Lösung der Aufgabe erfolgt erfindungsgemäß mit den Merkmalen der unabhängigen Ansprüche. Weitere praktische Ausführungsformen und Vorteile der Erfindung sind in den abhängigen Ansprüchen beschrieben.

Gemäß dem erfindungsgemäßen Verfahren zur vereinfachten Herstellung eines Dönerspießes, der aus mindestens einem Aufsteckspieß und darauf aufgespießten Fleischstücken gebildet ist, wird mindestens ein Fleischstück vor dem Aufspießen durch Pressverformen mittels einer Fleischbearbeitungsvorrichtung in eine Sollgröße mit einer vorgegebenen Fleisch-Pressform gebracht, an dem Fleischstück ein lokal begrenzter und identifizierbarer Aufsteckbereich ausgebildet und das mindestens eine Fleischstück anschließend so mit dem Aufsteckspieß verbunden, dass der Aufsteckbereich von dem Aufsteckspieß durchdrungen ist. Mit dem erfindungsgemäßen Verfahren können nicht nur gewachsene Fleischstücke in einer für die Herstellung eines Dönerspießes vorteilhaften Fleisch-Pressform hergestellt werden, sondern an dem Fleischstück wird gemäß dem erfindungsgemäßen Verfahren ferner ein Aufsteckbereich ausgebildet, welcher ein späteres, präzises und einfaches Aufstecken des Fleischstücks auf den Aufsteckspieß ermöglicht. Unabhängig davon, ob das Aufstecken des Fleischstücks anschließend manuell oder maschinell erfolgt, wird die Herstellung mit dem erfindungsgemäßen Verfahren gegenüber den aus der Praxis bekannten Vorgehensweisen signifikant vereinfacht, so dass Dönerspieße mit einem gewünschten Zielgewicht und einer gewünschten Größe mithilfe der Erfindung sehr viel einfacher, zielorientierter und mit geringerem Zeitaufwand herstellbar sind. Auch die gewichtsabhängige Form und Größe der Dönerspieße kann mit dem erfindungsgemäßen Verfahren vereinheitlicht werden, insbesondere indem ausgehend von Fleischstücken, welche ungefähr das gleiche Gewicht aufweisen, diese Fleischstücke jeweils in die gleiche Fleisch-Pressform gebracht und dann auf den Austeckspieß aufgesteckt werden. So können Überschüsse, die durch das nachträgliche Beschneiden der am Aufsteckspieß steckenden Fleischstücke minimiert oder sogar vollständig vermieden werden.

In einer praktischen Ausführungsform des erfindungsgemäßen Verfahrens wird als Aufsteckbereich mindestens eine Vertiefung, eine Durchgangsöffnung und/oder eine Aufsteckhülse in das Fleischstück eingebracht. Die Ausbildung einer Vertiefung ermöglicht es, die Relativposition eines Fleischstücks relativ zu dem Aufsteckspieß leichter zu finden, indem das Fleischstück bei Übereinstimmen der Kontaktstelle des Aufsteckspießes mit der Vertiefung eine haptische Rückmeldung erfolgt. Ferner ist das Durchdringen des Aufsteckspießes im Bereich der Vertiefung erleichtert, weil die Dicke des Fleischstücks in dem Aufsteckbereich aufgrund der Vertiefung entsprechend reduziert ist. Ist anstelle einer Vertiefung bereits eine Durchgangsöffnung in dem Fleischstücke vorgesehen, kann der Aufsteckspieß nach Ermittlung der richtigen Relativposition zwischen Aufsteckspieß und Fleischstück weitestgehend widerstandslos durch das Fleischstück hindurchdringen. Es ist, insbesondere wenn die Durchgangsöffnung in etwa den gleichen oder geringfügig kleineren Durchmesser aufweist als der Aufsteckspieß, lediglich die Gleitreibung des Fleischstücks gegenüber dem Aufsteckspieß zu überwinden.

Wenn anstelle einer Vertiefung oder Durchgangsöffnung eine Aufsteckhülse in das Fleischstück eingebracht wird, kann der Aufsteckbereich mithilfe der Aufsteckhülse besonders präzise ausgebildet werden. Dies ist insbesondere dann von Vorteil, wenn Fleisch verwendet wird, das im Aufsteckbereich dazu neigt, bereits bei geringer Krafteinwirkung aufzureißen oder elastisch nachzugeben. In diesem Fall kann die Anordnung einer Aufsteckhülse im Aufsteckbereich zu einer präzisen Positionierung von Fleischstücken relativ zu einem Aufsteckspieß führen.

In einer weiteren praktischen Ausführungsform des erfindungsgemäßen Verfahrens wird das mindestens eine Fleischstück mittels der Fleischbearbeitungsvorrichtung in eine runde - insbesondere in eine kreisrunde - Form gepresst, und/oder genau ein Aufsteckbereich wird mittig in dem mindestens einen Fleischstück ausgebildet. Eine runde Form, insbesondere kreisrunde Form, hat den Vorteil, dass die an einem Dönerspieß angeordneten Fleischstücke bei der späteren Weiterbearbeitung, insbesondere beim Grillen, einer gleichmäßigen Wärmeeinwirkung ausgesetzt sind. Dies ist vorteilhaft für ein gleichmäßiges Garen des Fleisches über den Umfang und auch über die Höhe des Dönerspießes. Da Dönerspieße üblicherweise genau einen, mittig angeordneten Aufsteckspieß aufweisen, ist die Ausbildung genau eines Aufsteckbereichs mittig in dem mindestens einen Fleischstück bevorzugt.

Der Vollständigkeit halber wird darauf hingewiesen, dass das erfindungsgemäße Verfahren vorzugsweise an einer Vielzahl von Fleischstücken angewendet wird und alle Fleischstücke wie vorstehend beschrieben auf den Aufsteckspieß aufgesteckt werden, so dass ein vollständiger Dönerspieß aus einer Vielzahl von mit dem erfindungsgemäßen Verfahren erstellten Fleischstücken gebildet ist, die in eine Sollgröße mit einer vorgegebenen Fleisch-Pressform gebracht wurden.

Wenn der Aufsteckbereich bereits vor oder bei dem Pressverformen mittels der Fleischbearbeitungsvorrichtung ausgebildet wird, kann die Durchführung des erfindungsgemäßen Verfahrens besonders zeitökonomisch durchgeführt werden, weil keine zusätzliche Taktzeit für die Ausbildung des Aufsteckbereichs benötigt wird.

Um mit dem erfindungsgemäßen Verfahren eine möglichst große Vielfalt von Dönerspießen mit unterschiedlichen Gewichten produzieren zu können, ist es weiter bevorzugt, wenn die Fleischbearbeitungsvorrichtung mindestens zwei unterschiedlich große Fleischaufnahmeformen aufweist, wobei abhängig von der Größe und/oder dem Gewicht des zu verformenden Fleischstücks oder abhängig von der Größe der gewünschten Fleisch-Pressform eine geeignete Fleischaufnahmeform ausgewählt wird.

Unter Bezugnahme auf die Bearbeitung der in der Beschreibungseinleitung genannten Fleischstücke wird darauf verwiesen, dass das Pressverformen der Fleischstücke, vorzugsweise bei einer Fleischtemperatur von unter 0 °C durchgeführt wird. Diesbezüglich hat sich in der Praxis gezeigt, dass Fleischtemperaturen von unter -1° und weiter bevorzugt unter -2° mit besonderen Vorteilen verbunden sind. Als besonders bevorzugt hat sich der Wertebereich zwischen -2 °C bis -10 °C und besonders bevorzugt zwischen -3 °C und -5 °C herausgestellt.

Besonders gute Ergebnisse bei der Durchführung des erfindungsgemäßen Verfahrens haben sich im Rahmen von Versuchen gezeigt, wenn die Fleischstücke vor dem Pressverformen mit einer Bindemittelmischung behandelt wurden und die Fleischstücke anschließend ebenfalls vor dem Pressverformen auf die vorstehend genannten Temperaturen bzw. einen der Temperaturbereiche heruntergekühlt wurden.

Die Erfindung betrifft auch eine Fleischbearbeitungsvorrichtung mit mindestens einer Fleischaufnahmeform und mit einem an die Fleischaufnahmeform angepassten Stempel zum Pressverformen eines Fleischstücks, wobei die Fleischaufnahmeform durch mindestens einen Ring und eine Auflagefläche gebildet ist, wobei der Ring relativ zu der Auflagefläche beweglich angeordnet ist und wobei der Stempel und der Ring eine Ring-Stempel-Vorrichtung bilden.

Als Ring ist in diesem Zusammenhang insbesondere ein einfacher Ausschnitt eines hohlzylindrischen Rohres geeignet. Ein solcher lässt sich nicht nur einfach und kostengünstig durch Beschneiden eines zylindrischen Rohres herstellen, sondern er lässt sich auch sehr gut reinigen. Dieser Aspekt ist für die dauerhafte und wiederholte Verwendung einer erfindungsgemäßen Fleischbearbeitungsvorrichtung von besonderer Bedeutung.

Bereits jetzt wird darauf hingewiesen, dass der Ring einer Ring-Stempel-Vorrichtung der erfindungsgemäßen Fleischbearbeitungsvorrichtung unterschiedliche Größen aufweisen kann. Es sind insbesondere Größen zwischen 10 cm und 30 cm bevorzugt. Im Speziellen wird auf Ringgrößen mit einem Durchmesser von 16 cm, 18 cm, 20 cm, 22 cm und 25 cm verwiesen.

Der Stempel und die Fleischaufnahmeform sind vorzugsweise so ausgebildet, dass der Stempel zum Pressverformen in eine Relativposition zu der Fleischaufnahmeform gebracht werden kann, dass ein in den Ring eingelegtes Fleischstück auf eine resultierende Fleischdicke zwischen 5 mm und 30 mm als Fleisch-Pressform gebracht werden kann. Bevorzugt sind resultierende Fleischdicken zwischen 5 mm und 25 mm, besonders bevorzugt Fleischdicken zwischen 5 mm und 20 mm. Dazu kann die Pressvorrichtung beispielsweise auf eine entsprechende Zieldicke eingestellt werden, insbesondere auf eine Zieldicke von 5 mm, 10 mm, 20 mm und/oder 25 mm.

In einer praktischen Ausführungsform einer erfindungsgemäßen Fleischbearbeitungsvorrichtung ist an dem Stempel mindestens ein Dorn oder eine Aufsteckhülsen-Pressvorrichtung zur Ausbildung eines Aufsteckbereichs in einem in dem Ring positionierten Fleischstück ausgebildet oder angeordnet. Auf die entsprechenden Vorteile wurde bereits in Verbindung mit dem erfindungsgemäßen Verfahren verwiesen.

Der Durchmesser eines Dorns bzw. einer Aufsteckhülse, welche mittels der genannten Aufsteckhülsen-Pressvorrichtung in das Fleischstück eingepresst wird, beträgt vorzugsweise zwischen 5 mm und 30 mm, besonders bevorzugt 10 mm bis 20 mm.

In einer weiteren praktischen Ausführungsform einer erfindungsgemäßen Fleischbearbeitungsvorrichtung sind der Stempel und/oder der mindestens eine Ring in eine Pressrichtung translatorisch verfahrbar ausgebildet. Besonders bevorzugt ist es, wenn sowohl der Stempel als auch der mindestens eine Ring in eine Pressrichtung translatorisch verfahrbar ausgebildet sind. In diesem Fall können der Ring und der Stempel nicht nur dazu verwendet werden, das Fleisch in eine Fleisch-Pressform zu verformen, sondern auch das in die Fleisch-Pressform gebrachte Fleischstück wieder auf einfache Art und Weise aus dem Ring herauszufördern. Dazu muss lediglich der Stempel relativ zu dem Ring so bewegt werden, dass das Fleischstück aus dem Ring in Pressrichtung heraus gedrückt wird. Die Pressrichtung ist vorzugsweise in Richtung der Schwerkraft nach unten orientiert.

Alternativ oder in Ergänzung dazu kann das in die Fleisch-Pressform gebrachte Fleischstück auch zunächst in dem Ring verbleiben, mit dem Ring zu einem Förderband bewegt und dort auf einem Förderband abgelegt werden. Das Bewegen kann insbesondere mittels eines Karussells einer Revolvereinheit erfolgen. Das Ablegen kann insbesondere schwerkraftunterstützt durch Rütteln, Vibrieren und/oder durch mechanische Unterstützung mittels eines Schiebers erfolgen.

Die Fleischbearbeitungsvorrichtung weist in einer weiteren praktischen Ausführungsform mindestens zwei Fleischaufnahmeformen auf, welche zwei - insbesondere unterschiedlich große - Ringe und mindestens zwei zum Eindringen in diese Ringe passende Stempel zur Erzielung von - insbesondere zwei unterschiedlich großen - Fleisch-Pressformen vorgesehen sind. Optional sind zwei Ring-Stempel-Vorrichtungen, drei Ring-Stempel-Vorrichtungen oder mehr Ring-Stempel-Vorrichtungen vorgesehen. Dies hat den Vorteil, dass die erfindungsgemäße Fleischbearbeitungsvorrichtung ohne Umrüstzeit für verschieden große Fleisch-Pressformen verwendbar ist und/oder mehrere Fleischstücke gleichzeitig in eine gewünschte Fleisch-Pressform gebracht werden können. Vorzugsweise ist - auch wenn mehrere Ring-Stempel-Vorrichtungen vorgesehen sind - immer nur eine Ring-Stempel-Vorrichtung in einer Arbeitsposition betriebsbereit, während sich die übrigen Ring-Stempel-Vorrichtungen in einer Ruheposition auf einem Karussell einer Revolvereinheit befinden. Durch Verdrehen des Karussells kann dann ohne Veränderung der Produktionsgeschwindigkeit eine beliebige Reihenfolge unterschiedlich großer Fleischstücke mit den Ring-Stempel-Vorrichtungen produziert werden.

Wenn bei einer erfindungsgemäßen Fleischbearbeitungsvorrichtung eine Kontroll- und/oder Positioniervorrichtung vorgesehen ist, um die Anordnung eines in dem Ring angeordneten Fleischstücks vor dem Pressverformen in einer Soll-Position zu überprüfen und/oder in eine Soll-Position zu bewegen, kann die Ergebnisqualität der in die gewünschte Fleisch-Pressform gebrachten Fleischstücke weiter erhöht werden, insbesondere weil signifikant außermittig angeordnete Fleischstücke vor dem Pressverformen in eine geeignete Soll-Position gebracht werden, in welcher die Wirkung des Stempels dazu führt, dass sich das Fleischstück beim Pressverformen unter einer möglichst gleichmäßigen Druckbelastung auf das Fleischstück in die Fleisch-Pressform verbracht wird.

In einer weiteren praktischen Ausführungsform einer erfindungsgemäßen Fleischbearbeitungsvorrichtung sind der mindestens eine Stempel und der damit korrespondierende Ring unabhängig voneinander bewegbar derart angeordnet und ausgebildet, dass durch Anheben des Rings und/oder Absenken des Stempels ein in seine Fleisch-Pressform gebrachtes Fleischstück mittels des Stempels aus dem Ring herausförderbar ist. Dies erleichtert es, die in ihrer Fleisch-Pressform gebrachten Fleischstücke von der Fleischbearbeitungsvorrichtung zu anderen Bearbeitungsstationen weiter zu fördern und diese kurzfristig weiter zu verarbeiten.

Versuche haben gezeigt, dass der Stempel erfindungsgemäßer Fleischbearbeitungsvorrichtungen vorzugsweise elektrisch oder hydraulisch angetrieben sind, wobei für elektrisch angetriebene Stempel ein hoher elektrischer Energiebedarf besteht, für welchen der üblicherweise vorhandenen Netzstrom oder auch ein etwaig vorhandener Starkstromanschluss nicht ausreichend sein können, insbesondere wenn der Stempel mit geringer Taktzeit betrieben werden soll. Ein hydraulischer Antrieb, insbesondere ein hydraulischer Antrieb mit einer Tandempumpe, hat sich als besonders geeignet erwiesen, insbesondere wenn über einen Teil des Pressweges eine hohe Geschwindigkeit bei geringer Presskraft und über einen Teil des Pressweges eine hohe Presskraft bei geringer Geschwindigkeit erforderlich ist. In diesem Fall ist es bevorzugt, wenn ein Zylinder des Tandemzylinders, der für eine hohe Geschwindigkeit vorgesehen ist, einen kleinen Querschnitt aufweist und der andere Zylinder des Tandemzylinders für die Erzeugung einer hohen Kraft bei kleiner Geschwindigkeit einen großen Querschnitt aufweist. Die hohe Geschwindigkeit kann dann insbesondere für einen Leerhub eingesetzt werden, welcher erforderlich ist, um den Stempel mit zum Kontakt mit einem Fleischstück nach unten zu verfahren. Anschließend wird auf den anderen Zylinder des Tandemzylinders umgeschaltet, um mit kleiner Geschwindigkeit das mindestens eine Fleischstück oder die Fleischportion mit geringer Geschwindigkeit zu verpressen und dem Fleisch so Zeit um "Fließen" zu geben.

Es ist bevorzugt, wenn die elektrischen und/oder hydraulischen Elemente der Fleischbearbeitungsvorrichtung in einem von dem Fleisch-Bearbeitungsbereich separierten Gehäuse angeordnet sind, insbesondere derart, dass bei der Reinigung des Fleisch-Bearbeitungsbereichs keine Reinigungsflüssigkeiten mit den elektrischen und/oder hydraulischen Komponenten in Kontakt geraten. Weiter bevorzugt ist es, das separierte Gehäuse in Schwerkraftrichtung betrachtet unterhalb des Fleisch-Bearbeitungsbereichs anzuordnen, damit bei Leckagen der Hydraulik oder anderen Undichtigkeiten im Antrieb keine Antriebsflüssigkeiten von oben in den Fleisch-Bearbeitungsbereich gelangen können.

Wenn ein hydraulischer Antrieb zum Einsatz kommt, ist es besonders bevorzugt, durch Motoren angetriebene Pumpen in Form einer Motor-Pumpe-Einheit einzusetzen, bei welchen die Motoren durch Frequenzumrichter angesteuert sind.

Weiter bevorzugt ist es, in Verbindung mit der Hydraulik zusätzlich Wegaufnehmer derart einzusetzen, dass eine Bewegung des Hydraulikzylinders vorgegeben werden kann, indem die Motor-Pumpe-Einheit nur den Druck und den Volumenstrom produziert, welcher für die vorgegebene Bewegung erforderlich ist. Mit einer solchen Motor-Pumpe-Einheit kann die Hydraulik effizient und mit besonders geringer Verlustleistung betrieben werden. Dadurch entsteht beim Betrieb der erfindungsgemäßen Fleischbearbeitungsvorrichtung nur geringe Wärme, was beim Betrieb in gekühlten Räumen energetisch vorteilhaft ist.

Vorzugsweise ist ein hydraulischer Antrieb als geschlossenes System ausgebildet.

In einer weiteren praktischen Ausführungsform einer erfindungsgemäßen Fleischbearbeitungsvorrichtung ist der Stempel dazu ausgelegt, ein in der Fleischaufnahmeform angeordnetes Fleischstück oder eine Fleischportion aus mehreren Fleischstücken mit einer geeigneten Druckkraft zu beaufschlagen, um das Fleischstück bzw. die Fleischportion in die jeweils gewünschte Fleisch-Pressform zu bringen. Diesbezüglich wird insbesondere auf Fleischstücke mit einer Dicke zwischen 3 cm und 6 cm verwiesen, welche in eine Fleisch-Pressform mit maximal der halben Ausgangsdicke verformt werden sollen. Anders ausgedrückt, ist die erfindungsgemäße Vorrichtung vorzugsweise so ausgelegt, dass die maximal Komprimierung des Fleischstücks 80 Prozent nicht überschreitet. Besonders bevorzugt ist es, wenn die Fleischbearbeitungsvorrichtung so ausgelegt ist, dass eine Komprimierung von 70 Prozent, 60 Prozent oder 50 Prozent nicht überschritten wird.

Bevorzugt ist der Stempel derart angetrieben, dass mit dem Stempel eine Wirkkraft von mehr als 2 t insbesondere eine Wirkkraft im Bereich zwischen 2 und 20 t, bevorzugt zwischen 3 und 10 t und besonders bevorzugt zwischen 5 und 10 t bewirkt werden kann.

Hinsichtlich der Flexibilität einer Döner Spießproduktion ist es besonders bevorzugt, wenn die Auflagefläche und/oder die mindestens eine Ring-Stempel-Vorrichtung Teil einer drehbaren Revolvereinheit sind. Mit einer derartigen Revolvereinheit ist eine Einheit gemeint, welche derart drehbar - insbesondere vollständig drehbar - ist, dass die Ring-Stempel-Vorrichtungen an unterschiedlichen Wirkorten nutzbar sind. Vorzugsweise weist die Revolvereinheit eine kreisförmige Grundform auf, so dass sich die Ring-Stempel-Vorrichtungen beim Drehen der Revolvereinheit auf dem gleichen Grundkreis bewegen.

Als Beispiel für einen drehbaren Revolvertisch wird auf einen kreisrunden Tisch verwiesen, welcher beispielsweise 2, 3, 4 oder 5 Bearbeitungsbereiche aufweisen kann, welche gleichmäßig über den Umfang verteilt angeordnet sind und durch Drehen des Tisches um einen jeweils vorgegebenen Winkel mit einer entsprechenden Bearbeitungsstation kombiniert werden können. Als Beispiel für eine drehbare Revolvereinheit mit mehreren Ring-Stempel-Vorrichtungen wird auf eine zentrale Drehachse verwiesen, an welcher über entsprechende Arme (vorzugsweise jeweils gleich lange Arme) 2,3, 4 oder 5 Ring-Stempel-Vorrichtungen derart installiert sind, dass durch Drehen der Revolvereinheit eine jeweils zu verwendende Ring-Stempel-Vorrichtung in eine vorgegebene Bearbeitungsposition gebracht werden kann.

In einer weiteren praktischen Ausführungsform einer erfindungsgemäßen Fleischbearbeitungsvorrichtung ist der mindestens eine Ring kraftschlüssig und/oder formschlüssig gegenüber der Auflagefläche fixierbar, und/oder der Ring ist derart relativ beweglich gegenüber der Auflagefläche angeordnet, dass ein Fleischstück nach dem Pressen in die Fleisch-Pressform durch Relativbewegung des Rings gegenüber der Auflagefläche von der Auflagefläche zu einem anderen Element förderbar ist.

Weitere praktische Ausführungsformen und Vorteile der Erfindung sind nachfolgend im Zusammenhang mit den Zeichnungen beschrieben. Es zeigen:
- Fig. 1: ein Ausführungsbeispiel einer erfindungsgemäßen Fleischbearbeitungsvorrichtung mit einer kreisförmigen Auflagefläche und drei Ring-Stempel-Vorrichtungen, die Teil einer Revolvereinheit sind, in einer schematischen Ansicht von oben,
- Fig. 2: eine Seitenansicht auf die Revolvereinheit aus Figur 1, in welcher nur die Auflagefläche und eine Ring-Stempel-Vorrichtung dargestellt ist, wobei sich die Ring-Stempel-Vorrichtung in einem ersten Funktionszustand befindet,
- Fig. 3: die Seitenansicht aus Figur 2, in welcher sich die Ring-Stempel-Vorrichtung in einem zweiten Funktionszustand befindet,
- Fig. 4: die Seitenansicht aus Figur 2, in welcher sich die Ring-Stempel-Vorrichtung in einem dritten Funktionszustand befindet und
- Fig. 5: die Seitenansicht aus Figur 2, in welcher sich die Ring-Stempel-Vorrichtung in einem vierten Funktionszustand befindet.

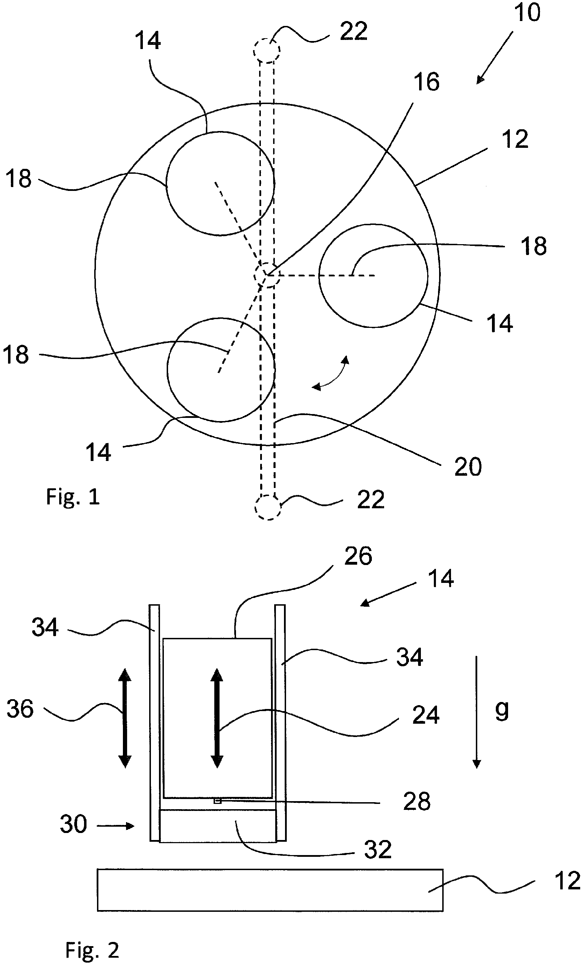

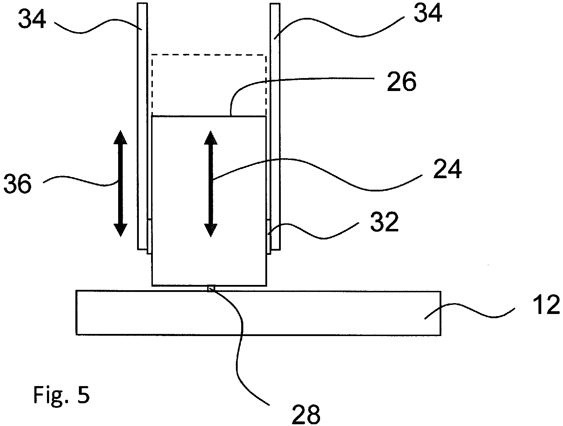

Figur 1 zeigt ein Ausführungsbeispiel einer Fleischbearbeitungsvorrichtung 10 mit einer kreisförmigen Auflagefläche 12 und drei Ring-Stempel-Vorrichtungen 14. Die Ring-Stempel-Vorrichtungen 14 sind in Figur 1 nur schematisch als Kreise dargestellt. Weitere Details zum Aufbau und zur Funktion der Ring-Stempel-Vorrichtungen 14 werden anhand der Figuren 2 bis 5 am Beispiel einer exemplarisch dargestellten Ring-Stempel-Vorrichtung 14 erläutert.

Die Ring-Stempel-Vorrichtungen 14 sind in dem gezeigten Ausführungsbeispiel über eine zentral über der Auflagefläche 12 angeordnete Drehachse 16 gelagert. Jede der Ring-Stempel-Vorrichtungen 14 ist an einemdrehbar um diese Drehachse 16 gelagerten Arm 18 befestigt. Die Drehachse 16 ist an einer Brücke 20 befestigt, welche sich in der gezeigten Ausführungsform zwischen zwei gegenüberliegend angeordneten, vertikalen Stützträgern 22 erstreckt. Die Drehachse 16, die Arme 18, die Brücke 20 und die Stützträger 22 sind in Figur 1 gestrichelt dargestellt, um den Blick auf die Auflagefläche 12 und die Ring-Stempel-Vorrichtungen 14 freizugeben. In den Figuren 2 bis 5 sind genannten Elemente nicht dargestellt.

Wie schon erwähnt, ist in den Figuren 2 bis 5 nur eine Ring-Stempel-Vorrichtung 14 exemplarisch dargestellt. Die anderen beiden Ring-Stempel-Vorrichtungen 14 sind identisch oder zumindest funktionsgleich ausgebildet. Hierauf wird im Folgenden noch weiter eingegangen. Zunächst wird jedoch die Funktionsweise der in den Figuren 2 bis 5 exemplarisch dargestellten Ring-Stempel-Vorrichtung 14 beschrieben.

Die Ring-Stempel-Vorrichtung 14 umfasst einen - hier vertikal, d.h. parallel zur Gravitationskraft g (Schwerkraft) - in Richtung des Doppelpfeils 24 verfahrbar gelagerten Stempel 26. Der Stempel 26 weist in der gezeigten Ausführungsform eine zylindrische Grundform auf. Der Stempel 26 ist insbesondere elektrisch oder hydraulisch angetrieben und in dem Ausführungsbeispiel als hydraulisch angetriebener Stempel 26 ausgebildet, wobei der Antrieb nicht dargestellt ist. An der zur Auflagefläche 12 gerichteten Seite weist der Stempel 26 einen mittig angeordneten Dorn 28 auf.

Der Stempel 26 ist umgeben von einer Hubeinheit 30, welche fest mit einem hohlzylindrisch ausgebildeten Ring 32 verbunden ist. Die Hubeinheit 30 ist in der gezeigten Ausführungsform durch zwei miteinander gekoppelte Hubstangen 34 gebildet, welche gemeinsam mit dem Ring 32 und unabhängig von dem Stempel 26 in Richtung des Doppelpfeils 36 bewegbar sind.

In dem in Figur 2 gezeigten Funktionszustand sind sowohl der Stempel 26 als auch der Ring 32 in eine obere Stellung verfahren und damit beabstandet zu der Auflagefläche 12 angeordnet.

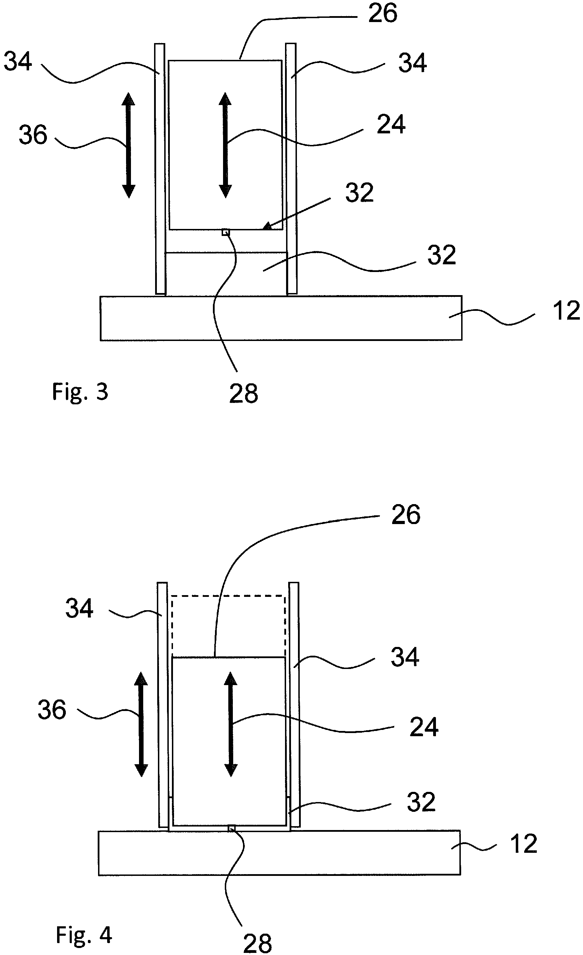

Wird der Ring 32 mit Hilfe der Hubvorrichtung 30, wie in Figur 3 gezeigt, so weit abgesenkt, dass die Hubvorrichtung 30 den Ring 32 gegen die Auflagefläche 12 presst, wird eine kraftschlüssige Verbindung zwischen dem Ring 32 und der Auflagefläche 12 hergestellt und so durch den der Auflagefläche 12 und dem von dem hohlzylindrischen Ring 32 umschlossenen Volumen ein oberseitig offener Behälter gebildet, welcher als Fleischaufnahmeform 38 dient.

Der Stempel 26 ist so auf die Größe des Rings 32 (nämlich auf dessen Innendurchmesser) angepasst, dass der Stempel 26 - wenn er wie in Figur 4 gezeigt, durch Absenken in den Ring 32 eintaucht - ein in der Fleischaufnahmeform 38 angeordnetes Fleischstück (nicht dargestellt) durch Pressverformen in eine Sollgröße mit einer vorgegebenen Fleisch-Pressform bringen kann. Wird der Stempel 26, wie in Figur 4 gezeigt, so weit abgesenkt, dass der Dorn 28 mit der Auflagefläche 12 in Kontakt gerät, wird dadurch in dem in die Fleisch-Pressform gebrachten Fleischstück unmittelbar eine Durchgangsöffnung ausgebildet, welche als Aufsteckbereich für die spätere Verwendung des Fleischstücks beim Aufstecken auf einen Aufsteckspieß dient.

Alternativ kann der Stempel 26 auch nur so weit in den Ring 32 einfahren, dass noch ein Abstand zur Auflagefläche 12 verbleibt. In diesem Fall wird in dem Fleischstück anstelle einer Durchgangsöffnung nur eine Vertiefung ausgebildet, welche eine zum Dorn 28 komplementäre Form aufweist.

Der Vollständigkeit halber wird darauf verwiesen, dass der Dorn 28 nicht - wie in dem Ausführungsbeispiel gezeigt - eine zylindrische Form aufweisen kann, sondern insbesondere auch als Kegelspitze oder Kegelstumpf oder anderweitig konisch ausgebildet sein kann. Diese Ausführungsformen sind aufgrund der leichteren Durchdringung des Fleischstücks bevorzugt.

Zum Lösen einer in die Fleisch-Pressform gebrachten Fleischstücks aus dem Ring 32 werden bei dem gezeigten Ausführungsbeispiel vorzugsweise zunächst der Ring 32 und der Stempel 26 wieder nach oben verfahren, d.h. von der Auflagefläche 12 weg bewegt. Anschließend wird durch erneutes Absenken des Stempels 26 das in die Fleisch-Pressform gebrachte Fleischstück aus dem Ring 32 nach unten herausgedrückt.

Der Vollständigkeit halber wird noch darauf verwiesen, dass das Wegfördern des in die Fleisch-Pressform gebrachten Fleischstücks auf geeignete Art und Weise erfolgen kann, insbesondere durch den Einsatz eines Schiebers, mittels welchem sich das Fleischstück auf ein sich von der Auflagefläche 12 wegführenden, nicht dargestelltes Förderband schieben lässt.

Das Positionieren eines noch unverformten Fleischstücks auf der Auflagefläche 12 kann ebenfalls auf geeignete Art und Weise erfolgen. Nur beispielhaft wird diesbezüglich auf die Möglichkeiten verwiesen, das Fleischstück vor dem Absenken des Rings 32 in dem in Figur 2 gezeigten Funktionszustand auf der Auflagefläche 12 zu positionieren oder das Fleischstück in eine bereits gebildete Fleischaufnahmeform 38 in dem in Figur 3 gezeigten Funktionszustand von oben einzubringen, insbesondere mittels eines Förderbandes, mittels welchem das Fleischstück in einen Bereich oberhalb der Fleischaufnahmeform 38 gefördert und dann in die Fleischaufnahmeform 38 abgeworfen wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Fleischbearbeitungsvorrichtung
- 12: Auflagefläche
- 14: Ring-Stempel-Vorrichtung
- 16: Drehachse
- 18: Arme
- 20: Brücke
- 22: Stützträger
- 24: Doppelpfeil
- 26: Stempel
- 28: Dorn
- 30: Hubeinheit
- 32: Ring
- 34: Hubstangen
- 36: Doppelpfeil
- 38: Fleischaufnahmeform

## Patentansprüche

1. Verfahren zur vereinfachten Herstellung eines Dönerspießes, der aus mindestens einem Aufsteckspieß und darauf aufgespießten Fleischstücken gebildet ist, **dadurch gekennzeichnet, dass** mindestens ein Fleischstück vor dem Aufspießen durch Pressverformen mittels einer Fleischbearbeitungsvorrichtung (10) in eine Sollgröße mit einer vorgegebenen Fleisch-Pressform gebracht wird, an dem Fleischstück ein lokal begrenzter und identifizierbarer Aufsteckbereich ausgebildet wird und das mindestens eine Fleischstück anschließend so mit dem Aufsteckspieß verbunden wird, dass der Aufsteckbereich von dem Aufsteckspieß durchdrungen ist.

2. Verfahren nach dem vorstehenden Anspruch, **dadurch gekennzeichnet, dass** als Aufsteckbereich mindestens eine Vertiefung, eine Durchgangsöffnung und/oder eine Aufsteckhülse in das Fleischstück eingebracht wird.

3. Verfahren nach einem der vorstehenden Ansprüche, **dadurch gekennzeichnet, dass** das mindestens eine Fleischstück mittels der Fleischbearbeitungsvorrichtung (10) in eine runde Form gepresst wird und/oder genau ein Aufsteckbereich mittig in dem mindestens einen Fleischstück ausgebildet wird.

4. Verfahren nach einem der vorstehenden Ansprüche, **dadurch gekennzeichnet, dass** der Aufsteckbereich bereits vor oder bei dem Pressverformen mittels der Fleischbearbeitungsvorrichtung (10) ausgebildet wird.

5. Verfahren nach einem der vorstehenden Ansprüche, **dadurch gekennzeichnet, dass** die Fleischbearbeitungsvorrichtung (10) mindestens zwei unterschiedlich große Fleischaufnahmeformen (38) aufweist, wobei abhängig von der Größe und/oder dem Gewicht des zu verformenden Fleischstücks oder abhängig von der Größe der gewünschten Fleisch-Pressform eine geeignete Fleischaufnahmeform (38) ausgewählt wird.

6. Verfahren nach einem der vorstehenden Ansprüche, **dadurch gekennzeichnet, dass** das Pressverformen der Fleischstücke bei einer Fleischtemperatur von unter 0°C durchgeführt wird.

7. Fleischbearbeitungsvorrichtung (10) mit mindestens einer Fleischaufnahmeform (38) und mit einem an die Fleischaufnahmeform angepassten Stempel (26) zum Pressverformen eines Fleischstücks, wobei die Fleischaufnahmeform (38) durch mindestens einen Ring (32) und eine Auflagefläche (12) gebildet ist, wobei der Ring (32) relativ zu der Auflagefläche (12) beweglich angeordnet ist und wobei der Stempel (26) und der Ring (32) eine Ring-Stempel-Vorrichtung (14) bilden.

8. Fleischbearbeitungsvorrichtung (10) nach dem vorstehenden Anspruch, **dadurch gekennzeichnet, dass** an dem Stempel (26) mindestens ein Dorn (28) oder eine Aufsteckhülsen-Einpressvorrichtung zur Ausbildung eines Aufsteckbereichs an einem in dem Ring (32) positionierten Fleischstück ausgebildet oder angeordnet ist.

9. Fleischbearbeitungsvorrichtung (10) nach einem der beiden vorstehenden Ansprüche, **dadurch gekennzeichnet, dass** der Stempel (26) und/oder der mindestens eine Ring (32) in eine Pressrichtung translatorisch verfahrbar ausgebildet sind.

10. Fleischbearbeitungsvorrichtung (10) nach einem der drei vorstehenden Ansprüche, **dadurch gekennzeichnet, dass** die Fleischbearbeitungsvorrichtung (10) mindestens zwei Fleischaufnahmeformen (38) aufweist, welche zwei Ringe (32) und mindestens zwei zum Eindringen in diese Ringe passende Stempel (26) zur Erzielung von Fleisch-Pressformen vorgesehen sind.

11. Fleischbearbeitungsvorrichtung (10) nach einem der vier vorstehenden Ansprüche, **dadurch gekennzeichnet, dass** eine Kontroll- und/oder Positioniervorrichtung vorgesehen ist, um die Anordnung eines in dem Ring (32) angeordneten Fleischstücks vor dem Pressverformen in einer Soll-Position zu überprüfen und/oder in eine Soll-Position zu bewegen.

12. Fleischbearbeitungsvorrichtung (10) nach einem der fünf vorstehenden Ansprüche, **dadurch gekennzeichnet, dass** der mindestens eine Stempel (26) und der damit korrespondierende Ring (32) unabhängig voneinander bewegbar derart angeordnet und ausgebildet sind, dass durch Anheben des Rings (32) und/oder Absenken des Stempels (26) ein in seine Fleisch-Pressform gebrachtes Fleischstück mittels des Stempels (26) aus dem Ring (32) herausförderbar ist.

13. Fleischbearbeitungsvorrichtung (10) nach einem der sechs vorstehenden Ansprüche, **dadurch gekennzeichnet, dass** der Stempel (26) elektrisch oder hydraulisch angetrieben ist und/oder der Stempel (26) dazu ausgelegt ist, ein in der Fleischaufnahmeform (38) angeordnetes Fleischstück mit einer geeigneten Druckkraft zu beaufschlagen, um das Fleischstück in die Fleisch-Pressform zu bringen.

14. Fleischbearbeitungsvorrichtung (10) nach einem der sieben vorstehenden Ansprüche, **dadurch gekennzeichnet, dass** die Auflagefläche (12) und/oder mindestens eine Ring-Stempel-Vorrichtung (14) Teil einer drehbaren Revolvereinheit sind.

15. Fleischbearbeitungsvorrichtung (10) nach einem der acht vorstehenden Ansprüche, **dadurch gekennzeichnet, dass** der mindestens eine Ring (32) kraftschlüssig und/oder formschlüssig gegenüber der Auflagefläche (12) fixierbar ist und/oder der Ring (32) derart relativbeweglich gegenüber der Auflagefläche (12) ist, dass ein Fleischstück nach dem Pressen in die Fleisch-Pressform durch Relativbewegung des Rings (32) gegenüber der Auflagefläche (12) von der Auflagefläche (12) zu einem anderen Element förderbar ist.

## Geänderte Patentansprüche

### Geänderte Patentansprüche gemäss Regel 137(2) EPÜ.

1. Verfahren zur vereinfachten Herstellung eines Dönerspießes, der aus mindestens einem Aufsteckspieß und darauf aufgespießten Fleischstücken gebildet ist, wobei mindestens ein Fleischstück vor dem Aufspießen durch Pressverformen mittels einer Fleischbearbeitungsvorrichtung (10) in eine Sollgröße mit einer vorgegebenen Fleisch-Pressform gebracht wird, an dem Fleischstück ein lokal begrenzter und identifizierbarer Aufsteckbereich ausgebildet wird und das mindestens eine Fleischstück anschließend so mit dem Aufsteckspieß verbunden wird, dass der Aufsteckbereich von dem Aufsteckspieß durchdrungen ist, **dadurch gekennzeichnet, dass** das Pressverformen der Fleischstücke bei einer Fleischtemperatur von unter 0°C durchgeführt wird.

2. Verfahren nach dem vorstehenden Anspruch, **dadurch gekennzeichnet, dass** als Aufsteckbereich mindestens eine Vertiefung, eine Durchgangsöffnung und/oder eine Aufsteckhülse in das Fleischstück eingebracht wird.

3. Verfahren nach einem der vorstehenden Ansprüche, **dadurch gekennzeichnet, dass** das mindestens eine Fleischstück mittels der Fleischbearbeitungsvorrichtung (10) in eine runde Form gepresst wird und/oder genau ein Aufsteckbereich mittig in dem mindestens einen Fleischstück ausgebildet wird.

4. Verfahren nach einem der vorstehenden Ansprüche, **dadurch gekennzeichnet, dass** der Aufsteckbereich bereits vor oder bei dem Pressverformen mittels der Fleischbearbeitungsvorrichtung (10) ausgebildet wird.

5. Verfahren nach einem der vorstehenden Ansprüche, **dadurch gekennzeichnet, dass** die Fleischbearbeitungsvorrichtung (10) mindestens zwei unterschiedlich große Fleischaufnahmeformen (38) aufweist, wobei abhängig von der Größe und/oder dem Gewicht des zu verformenden Fleischstücks oder abhängig von der Größe der gewünschten Fleisch-Pressform eine geeignete Fleischaufnahmeform (38) ausgewählt wird.

6. Fleischbearbeitungsvorrichtung (10) mit mindestens einer Fleischaufnahmeform (38) und mit einem an die Fleischaufnahmeform angepassten Stempel (26) zum Pressverformen eines Fleischstücks, wobei die Fleischaufnahmeform (38) durch mindestens einen Ring (32) und eine Auflagefläche (12) gebildet ist, wobei der Ring (32) relativ zu der Auflagefläche (12) beweglich angeordnet ist und wobei der Stempel (26) und der Ring (32) eine Ring-Stempel-Vorrichtung (14) bilden, **dadurch gekennzeichnet, dass** der Stempel (26) elektrisch oder hydraulisch angetrieben ist.

7. Fleischbearbeitungsvorrichtung (10) nach dem vorstehenden Anspruch, **dadurch gekennzeichnet, dass** an dem Stempel (26) mindestens ein Dorn (28) oder eine Aufsteckhülsen-Einpressvorrichtung zur Ausbildung eines Aufsteckbereichs an einem in dem Ring (32) positionierten Fleischstück ausgebildet oder angeordnet ist.

8. Fleischbearbeitungsvorrichtung (10) nach einem der beiden vorstehenden Ansprüche, **dadurch gekennzeichnet, dass** der Stempel (26) und/oder der mindestens eine Ring (32) in eine Pressrichtung translatorisch verfahrbar ausgebildet sind.

9. Fleischbearbeitungsvorrichtung (10) nach einem der drei vorstehenden Ansprüche, **dadurch gekennzeichnet, dass** die Fleischbearbeitungsvorrichtung (10) mindestens zwei Fleischaufnahmeformen (38) aufweist, welche zwei Ringe (32) und mindestens zwei zum Eindringen in diese Ringe passende Stempel (26) zur Erzielung von Fleisch-Pressformen vorgesehen sind.

10. Fleischbearbeitungsvorrichtung (10) nach einem der vier vorstehenden Ansprüche, **dadurch gekennzeichnet, dass** eine Kontroll- und/oder Positioniervorrichtung vorgesehen ist, um die Anordnung eines in dem Ring (32) angeordneten Fleischstücks vor dem Pressverformen in einer Soll-Position zu überprüfen und/oder in eine Soll-Position zu bewegen.

11. Fleischbearbeitungsvorrichtung (10) nach einem der fünf vorstehenden Ansprüche, **dadurch gekennzeichnet, dass** der mindestens eine Stempel (26) und der damit korrespondierende Ring (32) unabhängig voneinander bewegbar derart angeordnet und ausgebildet sind, dass durch Anheben des Rings (32) und/oder Absenken des Stempels (26) ein in seine Fleisch-Pressform gebrachtes Fleischstück mittels des Stempels (26) aus dem Ring (32) herausförderbar ist.

12. Fleischbearbeitungsvorrichtung (10) nach einem der sechs vorstehenden Ansprüche, **dadurch gekennzeichnet, dass** der Stempel (26) dazu ausgelegt ist, ein in der Fleischaufnahmeform (38) angeordnetes Fleischstück mit einer geeigneten Druckkraft zu beaufschlagen, um das Fleischstück in die Fleisch-Pressform zu bringen.

13. Fleischbearbeitungsvorrichtung (10) nach einem der sieben vorstehenden Ansprüche, **dadurch gekennzeichnet, dass** die Auflagefläche (12) und/oder mindestens eine Ring-Stempel-Vorrichtung (14) Teil einer drehbaren Revolvereinheit sind.

14. Fleischbearbeitungsvorrichtung (10) nach einem der acht vorstehenden Ansprüche, **dadurch gekennzeichnet, dass** der mindestens eine Ring (32) kraftschlüssig und/oder formschlüssig gegenüber der Auflagefläche (12) fixierbar ist und/oder der Ring (32) derart relativbeweglich gegenüber der Auflagefläche (12) ist, dass ein Fleischstück nach dem Pressen in die Fleisch-Pressform durch Relativbewegung des Rings (32) gegenüber der Auflagefläche (12) von der Auflagefläche (12) zu einem anderen Element förderbar ist.
